# FASCICULE DE BREVET EUROPEEN

(11) **EP 1 941 168 B1**
(45) Date de publication et mention de la délivrance du brevet: **23.09.2009**
(21) Numéro de dépôt: 06794509.7
(22) Date de dépôt: 28.07.2006
(51) Int. Cl.: F16B 19/10, B21J 15/04

(54) **RIVET AVEUGLE NOTAMMENT POUR FIXATION DE STRUCTURE ET SON PROCEDE DE POSE**
BLINDNIET, INSBESONDERE ZUR BEFESTIGUNG EINER STRUKTUR UND VERFAHREN ZU DESSEN EINFÜHRUNG
BLIND RIVET IN PARTICULAR FOR FIXING A STRUCTURE AND METHOD FOR INSERTING SAME

(30) Priorité: 29.08.2005 FR 0552593
(43) Date de publication de la demande: 09.07.2008
(73) Titulaire: ATELIERS DE LA HAUTE GARONNE ETS AURIOL ET CIE, 31131 Balma Cedex (FR); Ateliers de la Haute-Garonne Rivets, 31130 Flourens (FR); ERIS, 31130 Flourens (FR)
(72) Inventeur: AURIOL, Pierre, F-31130 Flourens (FR); AURIOL, Jean-Marc, F-31130 Flourens (FR)
(74) Mandataire: Thurgood, Alexander John
(86) Numéro de dépôt international: PCT/FR2006/050764
(87) Numéro de publication internationale: WO 2007/026089

(56) Documents cités:
- GB-A- 1 604 502
- US-A- 5 030 050

## Description

### DOMAINE D'APPLICATION DE L'INVENTION

La présente invention a trait au domaine des fixations de type rivets aveugles et notamment aux adaptations permettant de répartir dans les meilleures conditions les efforts de serrage de ces rivets.

### DESCRIPTION DE L'ART ANTÉRIEUR

Classiquement, un rivet aveugle comporte une douille tubulaire et un mandrin de traction traversant ladite douille. Le rivet est placé dans un trou traversant les éléments à assembler. La douille comporte sur une première extrémité une tête prenant appui sur un premier élément. La douille comporte une deuxième extrémité non épaulée qui dépasse du deuxième élément.

La traction du mandrin assure la déformation de l'extrémité non épaulée de la douille de façon à serrer les éléments entre l'épaulement de la douille et son extrémité déformée (bulbe). La surface en contact du bulbe avec le deuxième élément détermine la répartition des efforts de serrage du rivet sur les éléments à assembler.

L'agrandissement de cette surface de contact est un souci constant des concepteurs de rivets pour optimiser la répartition des efforts de serrage.

L'art antérieur propose des douilles en deux parties c'est à dire dont l'extrémité non épaulée se décompose en deux parties séparées à savoir :
- une première partie fixe, et
- une deuxième partie mobile qui se déplace et se déforme sous l'effort de traction sur et autour de la partie fixe pour finalement proposer en s'épanouissant sur la partie fixe une surface agrandie pour la répartition des efforts sur le deuxième élément.

Ce type de rivet a pour principal inconvénient de requérir la fabrication et la gestion d'un rivet comportant trois éléments.

L'art antérieur propose également des douilles en une seule partie mais dont l'extrémité non épaulée présente des rainures de pliage afin qu'une fois soumise à l'effort de traction du mandrin, la paroi de la douille se plie pour dédoubler la surface d'appui créée par le bulbe.

La technique du pliage a pour principal défaut de ne pas éviter la rupture finale en deux parties du bulbe et de nécessiter plus de matière.

Le document n° GB 1 604 502 décrit un rivet aveugle du type de celui constitué d'une douille déformable et d'un mandrin sécable, l'ensemble ainsi formé venant se positionner et traverser les orifices rendus sensiblement coaxiaux et ménagés dans au moins deux éléments à assembler, la douille comportant deux extrémités :
une première extrémité comportant une tête préformée pour définir une première surface d'appui sur la surface extérieure d'un premier élément, et
une deuxième extrémité qui, sous l'action d'une déformation par traction sur le mandrin, vient définir une deuxième surface d'appui sur la surface extérieure du deuxième élément,
la prolongation de l'effort ayant pour effet le rapprochement des deux surfaces d'appui et en conséquence le rapprochement des deux éléments à assembler.

La douille est constituée d'un seul tenant mais préformée pour présenter une deuxième extrémité en deux parties qui, sous l'action d'un effort axial, dont une première partie s'épanouit sur la partie de douille restée fixe puis se sépare de cette dernière par rupture, l'expansion de la partie mobile appelée manchon se faisant avec pliage intérieur de son extrémité sur elle-même pour former un bourrelet.

### DESCRIPTION DE L'INVENTION

Partant de cet état de fait, les demandeurs ont mené des recherches visant à proposer un rivet aveugle susceptible de solutionner les problèmes de répartition des efforts de serrage en équipant le rivet aveugle d'une douille améliorée qui, sous l'action de l'effort de traction généré par le mandrin, se déforme pour proposer une surface de contact plus grande du bulbe avec la tôle.

Le rivet aveugle de l'invention est du type de celui constitué d'une douille déformable accueillant un mandrin sécable,
l'ensemble ainsi formé vient se positionner et traverser les orifices rendus sensiblement coaxiaux et ménagés dans au moins deux éléments à assembler,
la douille comportant deux extrémités :
une première extrémité comportant une tête préformée pour définir une première surface d'appui sur la surface extérieure d'un premier élément, et
une deuxième extrémité qui, sous l'action d'une déformation par traction sur le mandrin, vient définir une deuxième surface d'appui sur la surface extérieure du deuxième élément,
la prolongation de l'effort ayant pour effet le rapprochement des deux surfaces d'appui et en conséquence le rapprochement des deux éléments à assembler.

Conformément à l'invention, le rivet est remarquable en ce que la douille est constituée d'un seul tenant mais préformée pour présenter une deuxième extrémité se décomposant en deux parties liées par une partie cassante et qui, sous l'action d'un effort axial, se séparent par rupture avant qu'une partie de douille mise en mouvement par l'effort de traction du mandrin, vienne s'épanouir autour de la partie de douille restée fixe, l'expansion de la partie mobile appelée manchon se faisant sans pliage. Le rivet de l'invention passe donc d'une configuration où il est constitué de deux pièces distinctes (un mandrin et une douille) à, une fois posé, une configuration où il est constitué de trois pièces (mandrin, douille de sertissage, douille de serrage).

Ce rivet est particulièrement avantageux en ce qu'il propose une surface d'appui agrandie du fait de l'épanouissement, pour la transmission de l'effort de traction ce qui contribue à un meilleur serrage par le mandrin. Ce mandrin est préformé d'une pluralité de cannelures sur lesquelles vient se sertir la tête de la douille ce qui contribue au maintien du serrage par le mandrin.

Le rivet de l'invention assure cette fonction sans pré-découper sa douille en deux parties. En effet, la douille du rivet de l'invention est en une seule partie et ce n'est que sous l'effort de traction produit sur le mandrin que les deux parties de l'extrémité non épaulée de la douille se séparent. Le conditionnement et l'utilisation de ce rivet en sont grandement facilités puisque seuls deux éléments doivent être gérés.

Les phases de pose du rivet de l'invention sont les suivantes :
- traction exercée sur le mandrin
- rupture de la douille en deux pièces
- épanouissement et appui de la douille de serrage sur un élément,
- sertissage de la douille de sertissage dans les gorges
ou cannelures du mandrin
- rupture du mandrin au niveau de sa gorge de rupture.

Afin de procéder à cet épanouissement, la douille est ménagée intérieurement et extérieurement de zones de rupture et de zones coniques. De même, la tête du mandrin et l'extrémité non épaulée de la douille avec laquelle il se met en contact, adoptent une surface de contact inclinée de façon à bien répartir l'effort de traction.

Pour ce faire, l'extrémité de la partie mobile de la douille venant s'épanouir sur la partie fixe de douille est avantageusement préformée intérieurement d'une forme conique qui vient glisser sur la partie fixe. De même, l'extrémité de la partie fixe de douille sur laquelle vient s'épanouir le manchon adopte une forme extérieure conique.

Bien que le document n° GB 1 604 502 décrive effectivement une douille d'un seul tenant, il ne décrit pas une rupture préalable à l'épanouissement. De plus, ce document décrit un bulbe c'est à dire que la partie mobile de la douille va former un renflement. Ce renflement consiste en une extension radiale conséquente vers l'extérieur de la partie mobile de la douille avec une zone de pli éloignée de l'extrémité de cette dernière pour former finalement un bourrelet d'appui.
En dehors du fait que la création d'un bulbe à renflement n'est pas l'effet recherché dans le rivet de l'invention, il semble important de rappeler l'effet technique recherché dans le type de rivet de l'invention à savoir que la partie aveugle doit avoir sensiblement la même hauteur d'un rivet sur l'autre, et d'une épaisseur à serrer à l'autre. Ainsi, la partie s'épanouissant n'est pas déformée pour éviter la création d'un renflement dont la variation est susceptible de faire varier la hauteur de la partie aveugle posée. Dans l'invention, ce besoin est mis en adéquation avec le fait que la douille est initialement d'un seul tenant et (en conséquence) dans un seul et même matériau. Le verrouillage est réalisé par sertissage de la tête de douille sur les cannelures prévues à cet effet dans le mandrin. Une hauteur constante de la partie aveugle garantit un bon serrage quelle que soit l'épaisseur à serrer.
Dans l'invention, le déplacement du mandrin dépend de l'épaisseur à serrer, ce qui permet d'avoir un bon sertissage quelque soit l'endroit où l'on se trouve dans la plage de serrage de la fixation. La rupture avant épanouissement définie par le libellé de la première revendication, participe au maintien de la hauteur de la partie mobile de la douille en évitant toute déformation avant rupture. En outre, dans l'invention, la déformation suivant la rupture n'est qu'un épanouissement autour de la partie fixe et ne requiert pas un pliage conséquent susceptible de modifier la hauteur de la partie mobile ou de faire franchir la limite de raideur de cette dernière. Le sertissage est réalisé avant que la force de traction ne dépasse la limite de raideur de la partie mobile épanouie et donc avant que cette partie ne varie en hauteur.
La rupture avant épanouissement évite en outre une trop grande amplitude de déformation avant serrage, amplitude qui aurait pour conséquence la formation de criques dans le métal. Ainsi, une autre objet de l'invention concerne un procédé de pose qui est remarquable en ce qu'il consiste, à assurer la rupture en deux parties de la douille avant de démarrer l'expansion de la partie mobile.

En outre afin de garantir une hauteur constante à la partie aveugle de la fixation, le procédé est remarquable en ce qu'il consiste à sertir la tête de la douille sur les cannelures du mandrin une fois la partie mobile de la douille en appui sur l'élément à fixer et avant le dépassement d'un effort de traction correspondant à la limite maximale de raideur de ladite partie mobile une fois épanouie.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un rivet conforme à l'invention.

### BRÈVE DESCRIPTION DES DESSINS

La figure 1 est un dessin schématique d'une vue en coupe d'un mode de réalisation d'un rivet conforme à l'invention et installé dans un trou traversant deux éléments,

Les figures 2a, 2b, 2c illustrent la déformation du rivet illustré en figure 1.

### DESCRIPTION DES MODES DE RÉALISATION PRÉFÉRÉS

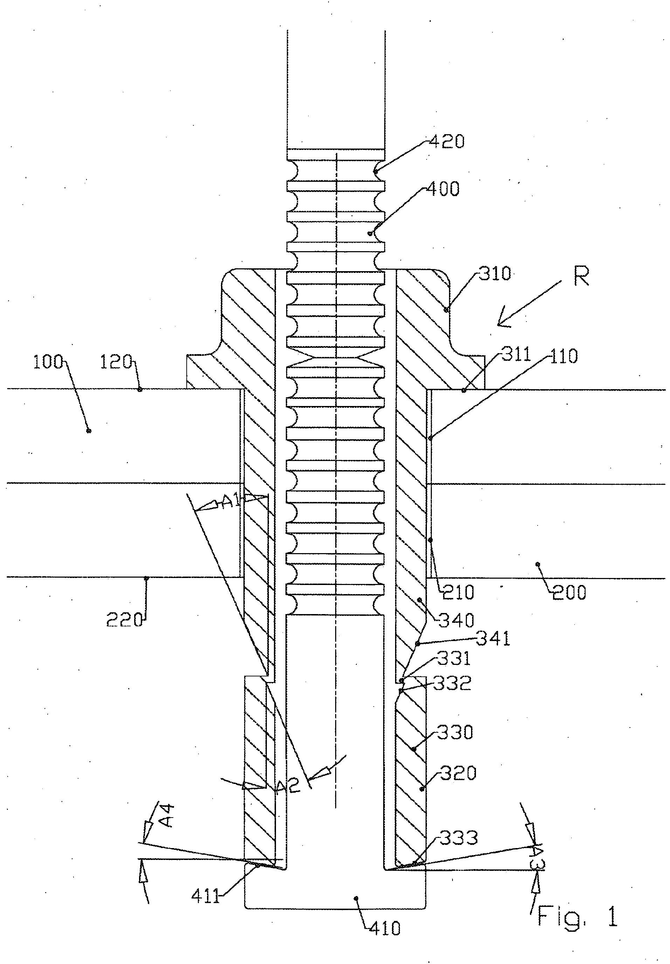

Tel qu'illustré sur le dessin de la figure 1, le rivet aveugle référencé R dans son ensemble assure l'assemblage d'au moins deux éléments 100 et 200. Ce rivet R est un ensemble constitué d'une douille déformable 300 et d'un mandrin sécable 400. Comme illustré, l'ensemble ainsi formé vient se positionner et traverser deux orifices 110 et 210 rendus sensiblement coaxiaux et ménagés dans les éléments 100 et 200 à assembler.

La douille 300 comporte deux extrémités :
- une première extrémité 310 comportant une tête protubérante préformée pour définir une première surface d'appui 311 sur la surface extérieure 120 d'un premier élément 100, et
- une deuxième extrémité 320 qui sous l'action d'une déformation par traction sur le mandrin 400 vient définir une deuxième surface d'appui sur la surface extérieure 220 dudit deuxième élément 200.

La prolongation de l'effort a pour effets le rapprochement des deux surfaces d'appui et par voie de conséquence, le rapprochement et la fixation des deux éléments 100 et 200 à assembler.

Comme illustré, le mandrin 400 présente deux extrémités :
- une première extrémité comportant une tête 410 qui vient en appui sur la douille 300 lors de l'effort de traction afin de la déformer pour créer un bulbe et
- une deuxième extrémité auquel vient s'associer le module de traction de l'outil de pose.

Conformément à l'invention, la douille 300 est constituée d'un seul tenant mais préformée pour présenter une deuxième extrémité en deux parties qui, sous l'action d'un effort axial, se séparent par rupture pour qu'une partie de douille 330 mise en mouvement par l'effort de traction du mandrin 400, vienne s'épanouir autour de la partie de douille 340 restée fixe, l'expansion de la partie mobile 330 appelée manchon se faisant sans pliage.

Comme illustré par le dessin de la figure 1, le manchon 330 est lié au reste de la douille au moyen d'une partie cassante ou zone de rupture 331.

En outre, l'extrémité du manchon 330 venant s'épanouir sur la partie fixe 340 de douille est avantageusement préformée intérieurement d'une forme conique 332 qui vient glisser sur la forme conique extérieure 341 de la partie fixe 340.

Selon un mode de réalisation préféré mais non limitatif, l'angle formé par les surfaces 332 et 341 appartenant respectivement au manchon 330 et à la partie fixe de la douille 340 et venant en contact pendant l'épanouissement a fait l'objet d'une étude afin d'optimiser l'épanouissement de la douille pour éviter notamment la création de criques. Ainsi, selon un mode de réalisation préféré, l'angle A1 formé par la surface conique 341 appartenant à la partie fixe de la douille est compris entre 14 et 19 degrés, et l'angle A2 formé par la surface conique 341 appartenant à la partie mobile ou manchon 330 est compris entre 5 et 10 degrés. Selon un autre mode de réalisation, l'angle A1 est compris entre 10 et 19 degrés.

La bonne détermination de ces angles permet à la partie mobile formant le manchon de serrage de glisser sur la douille une fois qu'il y a eu rupture. De plus, elle permet de diminuer l'effort de frottement entre les deux parties de la douille. Il n'y a donc pas d'obstacle au glissement de la partie mobile qui va seulement s'agrandir sans retournement de ses rebords.

De plus, afin d'optimiser les efforts de traction, l'extrémité du manchon 330 venant en contact avec la tête 410 du mandrin 400 est préformée d'une surface conique 333 venant en correspondance avec une surface conique 411 ménagée sur la tête 410 du mandrin 400.

Selon un mode de réalisation, l'angle des surfaces tronconiques (333 et 411) appartenant respectivement au manchon (330) et à la tête de mandrin (410) et restant en contact pendant le rivetage, est égal pour les deux surfaces tronconiques à environ 25 degrés.

Selon un autre mode de réalisation préféré mais non limitatif, l'angle A3 de la surface tronconique 411 appartenant au manchon est égal à environ 25 degrés. L'angle A4 de la surface tronconique 333 appartenant au mandrin et restant en contact pendant le rivetage avec la surface tronconique 411 est égal à environ 18 degrés.

Cet angle améliore le positionnement de la douille 300 sur le mandrin 400 et évite tout échappement de la douille lors de la pose. La différence d'angle permet de réaliser un auto-centrage des pièces venant en contact.

Selon une autre caractéristique particulièrement avantageuse de l'invention, la douille 300 est en alliage d'aluminium comme par exemple l'alliage connu sous la désignation 2017 T4 dont la résistance mécanique est comprise entre 420 et 520 MPa. La douille peut bien entendu être envisagée dans d'autres matériaux comme ceux connus sous les désignations suivantes :
- 2024T4,
- inox 304,
- Titane au colombium,
- etc...

Selon une autre caractéristique particulièrement avantageuse de l'invention, le mandrin 400 présente une résistance mécanique comprise entre 1500 et 2000 MPa. Selon une autre caractéristique, le mandrin 400 présente une résistance mécanique comprise entre 1200 et 2000 MPa.

Selon un mode préféré, ce mandrin est réalisé dans de l'acier inoxydable connu sous la désignation inox AISI 302. Selon un autre mode préféré, ce mandrin est réalisé dans de l'acier inoxydable connu sous la désignation inox AISI 304. Selon un autre mode de réalisation le mandrin est réalisée dans un acier inoxydable écroui. Ce matériau a un module d'élasticité élevé ce qui minimise le relâchement élastique après rupture dudit mandrin.

Ce mandrin peut bien entendu être réalisé dans d'autres matériaux tel du titane connu sous la désignation TA6V.

En outre, il est également prévu pour certain matériau, un traitement thermique de revenu afin d'augmenter la raideur du matériau et ainsi de diminuer son relâchement élastique. En effet, les demandeurs ont pour objectif de diminuer le relâchement élastique du mandrin pour diminuer le relâchement de contrainte dans les éléments à assembler après rupture ce qui a pour effet d'augmenter le serrage. Ainsi, l'effort de retenue de la fixation une fois posée est compris entre 50 et 70 % de l'effort de traction exercée par le mandrin.

L'association des deux matériaux utilisés respectivement pour la douille et pour le mandrin participe à la mise en place d'une tension installée.

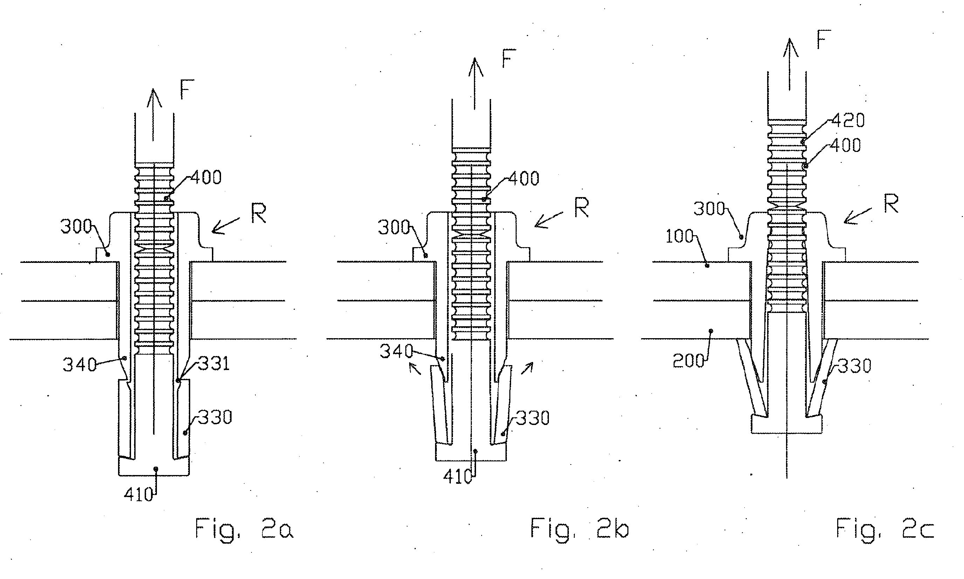

Les figures 2a, 2b et 2c montrent, en vue en coupe, la déformation progressive du manchon 330 après que la douille 300 se soit scindée en deux parties.

Le premier effort F auquel est soumise la douille 300 casse la zone de rupture 331 (cf. figure 2a). La continuation de l'effort F assure l'épanouissement du manchon 330 autour de la partie fixe 340 de la douille 300 (cf. figure 2b). De plus, la continuation de l'effort F de traction poursuit l'épanouissement jusqu'à ce que le manchon recouvre la partie fixe 340 et vienne en contact avec l'élément à assembler 200 (cf. figure 2c). La tête de douille 310 sera ensuite sertie sur les cannelures 420 du mandrin 400. La disposition de ces cannelures 420 est particulièrement importante en ce qu'elles garantissent le sertissage de la tête 310 quelle que soit l'épaisseur à serrer. En effet, dans l'invention la hauteur de la partie aveugle reste constante du fait qu'une fois épanouie et en contact avec l'élément à fixer 200 la partie mobile 330 de la douille 300 ne se déforme plus.

Comme illustrée, la surface d'appui du bulbe formé par la déformation de l'extrémité non épaulée de la douille 300 du rivet R conforme à l'invention, est largement agrandie répondant ainsi aux besoins des utilisateurs de tels rivets.

Les efforts participant au procédé de pose de ce rivet peuvent être décomposés de la façon suivant
- F1 = effort de traction sur le mandrin,
- F2 = effort de tenue à l'arrachement de la fixation,
- F3 = tension installé de la fixation,
- F4 = effort de rupture en deux parties de la douille,
- F5 = effort d'épanouissement de la partie mobile de douille sur la partie fixe de la douille,
- F6 = effort de début de filage des gorges de sertissage, Le procédé de l'invention est remarquable en ce qu'il consiste à sertir la tête de la douille sur les cannelures du mandrin une fois la partie mobile de la douille en appui sur l'élément à fixer et avant le dépassement d'un effort de traction correspondant à la limite maximale de raideur de ladite partie mobile une fois épanouie. Selon la décomposition des efforts faites ci-dessus le procédé est résumé par les inégalités suivantes : F4<F5<F6<F1.

La continuation de l'effort de traction provoque la rupture du mandrin au niveau de la gorge de rupture prévue à cet effet.

Ainsi, par exemple, des modifications géométriques sont susceptibles d'être apportées , tout particulièrement si une version de ce rivet est développée avec gonflement (le mandrin vient faire gonfler la douille de quelques centièmes de millimètres afin d'introduire des contraintes radiales et tangentielles dans le trou pour augmenter la tenue en fatigue).

En outre, en fonction des matériaux utilisés un traitement de surface est effectué à des fins de protection contre la corrosion. De plus, les douilles peuvent être lubrifiées afin de diminuer les efforts dus au frottement en particulier lorsque le manchon glisse sur la partie fixe de la douille et lors du filage de la douille dans le nez de pose de l'outil.

## Revendications

1. Rivet (R) aveugle du type de celui constitué d'une douille (300) déformable et d'un mandrin sécable (400), l'ensemble ainsi formé venant se positionner et traverser les orifices (110 et 210) rendus sensiblement coaxiaux et ménagés dans au moins deux éléments (100 et 200) à assembler,
la douille (300) comportant deux extrémités :
une première extrémité (310) comportant une tête préformée pour définir une première surface d'appui (311) sur la surface extérieure (120) d'un premier élément (100), et
une deuxième extrémité (320) qui, sous l'action d'une déformation par traction sur le mandrin (400), vient définir une deuxième surface d'appui sur la surface extérieure (220) du deuxième élément (200),
la prolongation de l'effort ayant pour effet le rapprochement des deux surfaces d'appui et en conséquence le rapprochement des deux éléments (100 et 200) à assembler, **CARACTÉRISÉ PAR LE FAIT QUE** la douille (300) est constituée d'un seul tenant mais préformée pour présenter une deuxième extrémité (320) en deux parties (330 et 340) qui, sous l'action d'un effort axial (flèche F), se séparent par rupture avant qu'une partie de douille (330) mise en mouvement par l'effort de traction du mandrin (400), vienne s'épanouir autour de la partie de douille restée fixe (340), l'expansion de la partie mobile (330) appelée manchon se faisant sans pliage.

2. Rivet (R) selon la revendication 1, **CARACTÉRISÉ PAR LE FAIT QUE** l'extrémité de la partie de douille mobile (330) venant s'épanouir sur la partie fixe (340) de douille est avantageusement préformée intérieurement d'une forme conique (332) qui vient glisser sur la partie fixe (340).

3. Rivet (R) selon la revendication 1, **CARACTÉRISÉ PAR LE FAIT QUE** l'extrémité (340) de la partie fixe de douille (300) sur laquelle vient s'épanouir la partie de douille mobile (330) adopte une forme extérieure conique (341).

4. Rivet (R) selon la revendication 3, **CARACTÉRISÉ PAR LE FAIT QUE** l'angle (A1) formé par la surface conique (341) appartenant à la partie fixe de la douille (300) est compris entre 14 et 19 degrés.

5. Rivet (R) selon la revendication 3, **CARACTÉRISÉ PAR LE FAIT QUE** l'angle (A1) formé par la surface conique (341) appartenant à la partie fixe de la douille (300) est compris entre 10 et 19 degrés.

6. Rivet (R) selon la revendication 2, **CARACTÉRISÉ PAR LE FAIT QUE** l'angle (A2) formé par la surface conique (332) intérieure appartenant à la partie mobile (330) est compris entre 5 et 10 degrés.

7. Rivet (R) selon la revendication 1, **CARACTÉRISÉ PAR LE FAIT QUE** ladite douille (300) est réalisée dans un alliage d'aluminium.

8. Rivet (R) selon la revendication 1, **CARACTÉRISÉ PAR LE FAIT QUE** ledit mandrin (400) est réalisé dans un acier inoxydable.

9. Rivet (R) selon la revendication 1, **CARACTÉRISÉ PAR LE FAIT QUE** le mandrin (400) présente une résistance mécanique comprise entre 1500 et 2000 MPa.

10. Rivet (R) selon la revendication 1, **CARACTÉRISÉ PAR LE FAIT QUE** le mandrin (400) présente une résistance mécanique comprise entre 1200 et 2000 MPa.

11. Rivet (R) selon la revendication 1, **CARACTÉRISÉ PAR LE FAIT QUE** l'extrémité du manchon (330) venant en contact avec la tête (410) du mandrin (400) est préformée d'un surface conique (333) venant en correspondance avec une surface conique (411) ménagée sur la tête (410) du mandrin (400).

12. Rivet (R) selon la revendication 11, **CARACTÉRISÉ PAR LE FAIT QUE** l'angle des surfaces tronconiques (333 et 411) appartenant respectivement au manchon (330) et à la tête de mandrin (410) et restant en contact pendant le rivetage, est égal à environ 25 degrés.

13. Rivet (R) selon la revendication 9, **CARACTÉRISÉ PAR LE FAIT QUE** l'angle (A3) de la surface tronconique (411) appartenant au manchon est égal à environ 25 degrés et l'angle (A4) de la surface tronconique (333) appartenant au mandrin et restant en contact pendant le rivetage avec la surface tronconique (411) est égal à environ 18 degrés.

14. Rivet (R) selon la revendication 1, **CARACTÉRISÉ PAR LE FAIT QUE** ledit mandrin (400) est préformé d'une pluralité de cannelures (420) sur lesquelles vient se sertir la tête de la douille.

15. Procédé de pose d'un rivet (R) selon les revendications 1 et 14, **CARACTÉRISÉ EN CE QU'**il consiste à sertir la tête de la douille (310) sur les cannelures (420) du mandrin (420) une fois la partie mobile (330) de la douille (300) en appui sur l'élément à fixer (200) et avant le dépassement d'un effort de traction correspondant à la limite maximale de raideur de ladite partie mobile (330) une fois épanouie.

## Claims

1. Blind rivet (R) of the type of that consisting of a deformable sleeve (300) and a divisible mandrel (400),
the assembly thus formed being positioned and passing through the apertures (110 and 210) made substantially coaxial and formed in at least two elements (100 and 200) to be assembled,
the sleeve (300) comprising two ends:
a first end (310) comprising a preformed head for defining a first support surface (311) on the external surface (120) of a first element (100), and
a second end (320) which, under the action of deformation by pulling on the mandrel (400), comes to define a second support surface on the external surface (220) of the second element (200),
prolonging the force having the effect of bringing the two support surfaces closer together and consequently bringing closer together the two elements (100 and 200) to be assembled, **characterised by** the fact that the sleeve (300) consists of a single piece, but is preformed in order to have a second end (320) in two parts (330 and 340) which, under the action of an axial force (arrow F), separate by breaking before a sleeve part (330) set in motion by the pulling force of the mandrel (400) opens out around the sleeve part that remained stationary (340), the expansion of the movable part (330) referred to as a collar being done without bending.

2. Rivet (R) according to claim 1, **characterised by** the fact that the end of the movable sleeve part (330) that comes to open out over the stationary sleeve part (340) is advantageously preformed internally with a conical shape (332) that slides over the stationary part (340).

3. Rivet (R) according to claim 1, **characterised by** the fact that the end (340) of the stationary sleeve part (300) over which the movable sleeve part (330) opens out adopts a conical external shape (341).

4. Rivet (R) according to claim 3, **characterised by** the fact that the angle (A1) formed by the conical surface (341) belonging to the stationary part of the sleeve (300) lies between 14 and 19 degrees.

5. Rivet (R) according to claim 3, **characterised by** the fact that the angle (A1) formed by the conical surface (341) belonging to the stationary part of the sleeve (300) lies between 10 and 19 degrees.

6. Rivet (R) according to claim 2, **characterised by** the fact that the angle (A2) formed by the internal conical surface (332) belonging to the movable part (330) lies between 5 and 10 degrees.

7. Rivet (R) according to claim 1, **characterised by** the fact that said sleeve (300) is made from an aluminium alloy.

8. Rivet (R) according to claim 1, **characterised by** the fact that said mandrel (400) is made from a stainless steel.

9. Rivet (R) according to claim 1, **characterised by** the fact that the mandrel (400) has a mechanical strength lying between 1500 and 2000 MPa.

10. Rivet (R) according to claim 1, **characterised by** the fact that the mandrel (400) has a mechanical strength lying between 1200 and 2000 MPa.

11. Rivet (R) according to claim 1, **characterised by** the fact that the end of the collar (330) coming into contact with the head (410) of the mandrel (400) is preformed with a conical surface (333) coming into correspondence with a conical surface (411) made on the head (410) of the mandrel (400).

12. Rivet (R) according to claim 11, **characterised by** the fact that the angle of the tapered surfaces (333 and 411), belonging respectively to the collar (330) and the mandrel head (410) and remaining in contact during the riveting, is equal to approximately 25 degrees.

13. Rivet (R) according to claim 9, **characterised by** the fact that the angle (A3) of the tapered surface (411) belonging to the collar is equal to approximately 25 degrees and the angle (A4) of the tapered surface (333) belonging to the mandrel and remaining in contact during the riveting with the tapered surface (411) is equal to approximately 18 degrees.

14. Rivet (R) according to claim 1, **characterised by** the fact that said mandrel (400) is preformed with a plurality of serrations (420) onto which the head of the sleeve is crimped.

15. Method of fitting a rivet (R) according to claims 1 and 14, **characterised in that** it consists of crimping the head of the sleeve (310) onto the serrations (420) of the mandrel (420) once the movable part (330) of the sleeve (300) is leaning on the element to be fixed (200) and before exceeding of a pulling force corresponding to the maximum limit of resistance to elastic deformation of said movable part (330) once opened out.

## Patentansprüche

1. Blindniet (R) von der Art bestehend aus einer verformbaren Hülse (300) und einem teilbaren Dorn (400),
wobei das derart gebildete Ganze an den Öffnungen (110 und 210), die im Wesentlichen koaxial gemacht werden und in mindestens zwei zusammenzufügenden Elementen (100 und 200) eingerichtet sind, angeordnet wird und durch diese hindurch geht,
wobei die Hülse (300) zwei Enden umfasst:
ein erstes Ende (310), das einen vorgeformten Kopf umfasst, um eine erste Auflagefläche (311) auf der Außenfläche (120) eines ersten Elements (100) zu definieren, und
ein zweites Ende (320), das unter der Einwirkung einer Verformung durch Zug auf den Dorn (400) eine zweite Auflagefläche auf der Außenfläche (220) des zweiten Elements (200) definiert,
wobei die Fortsetzung der Belastung zur Annäherung der beiden Auflageflächen und folglich zur Annäherung der beiden zusammenzufügenden Elemente (100 und 200) führt, **dadurch gekennzeichnet, dass** die Hülse (300) einstückig gebildet ist, jedoch vorgeformt ist, um ein zweites Ende (320) aus zwei Teilen (330 und 340) aufzuweisen, die sich unter der Einwirkung einer Axialbelastung (Pfeil F) durch Abreißen trennen, bevor ein Hülsenteil (330), der durch die Zugbelastung des Dorns (400) in Bewegung versetzt wird, sich um den fest gebliebenen Hülsenteil (340) ausweitet, wobei die Ausdehnung des als Muffe bezeichneten beweglichen Teils (330) ohne Biegung erfolgt.

2. Niet (R) nach Anspruch 1, **dadurch gekennzeichnet, dass** das Ende des beweglichen Hülsenteils (330), das sich auf dem feststehenden Hülsenteil (340) ausweitet, vorteilhaft innen mit einer konischen Form (332) vorgeformt ist, die auf dem feststehenden Teil (340) gleitet.

3. Niet (R) nach Anspruch 1, **dadurch gekennzeichnet, dass** das Ende (340) des feststehenden Hülsenteils (300), auf dem sich der bewegliche Hülsenteil (330) ausweitet, eine äußere konische Form (341) annimmt.

4. Niet (R) nach Anspruch 3, **dadurch gekennzeichnet, dass** der Winkel (A1), der von der konischen Oberfläche (341) gebildet wird, die zu dem feststehenden Teil der Hülse (300) gehört, zwischen 14 und 19 Grad liegt.

5. Niet (R) nach Anspruch 3, **dadurch gekennzeichnet, dass** der Winkel (A1), der von der konischen Oberfläche (341) gebildet wird, die zu dem feststehenden Teil der Hülse (300) gehört, zwischen 10 und 19 Grad liegt.

6. Niet (R) nach Anspruch 2, **dadurch gekennzeichnet, dass** der Winkel (A2), der von der inneren konischen Oberfläche (332) gebildet wird, die zu dem beweglichen Teil (330) gehört, zwischen 5 und 10 Grad liegt.

7. Niet (R) nach Anspruch 1, **dadurch gekennzeichnet, dass** das die Hülse (300) aus einer Aluminiumlegierung hergestellt wird.

8. Niet (R) nach Anspruch 1, **dadurch gekennzeichnet, dass** der Dorn (400) aus rostfreiem Stahl hergestellt wird.

9. Niet (R) nach Anspruch 1, **dadurch gekennzeichnet, dass** der Dorn (400) eine mechanische Festigkeit zwischen 1500 und 2000 MPa aufweist.

10. Niet (R) nach Anspruch 1, **dadurch gekennzeichnet, dass** der Dorn (400) eine mechanische Festigkeit zwischen 1200 und 2000 MPa aufweist.

11. Niet (R) nach Anspruch 1, **dadurch gekennzeichnet, dass** das Ende der Muffe (330), die mit dem Kopf (410) des Dorns (400) in Berührung kommt, mit einer konischen Oberfläche (333) vorgeformt ist, die einer konischen Oberfläche (411) entspricht, die auf dem Kopf (410) des Dorns (400) eingerichtet ist.

12. Niet (R) nach Anspruch 11, **dadurch gekennzeichnet, dass** der Winkel der kegelstumpfartigen Oberflächen (333 und 411), die jeweils zu der Muffe (330) und dem Kopf des Dorns (410) gehören und während der Nietung in Kontakt bleiben, ungefähr gleich 25 Grad ist.

13. Niet (R) nach Anspruch 9, **dadurch gekennzeichnet, dass** der Winkel (A3) der kegelstumpfförmigen Oberfläche (411), die zu der Muffe gehört, gleich ungefähr 25 Grad ist und der Winkel (A4) der kegelstumpfförmigen Oberfläche (333), die zu dem Dorn gehört und während der Nietung mit der kegelstumpfförmigen Oberfläche (411) in Kontakt bleibt, gleich ungefähr 18 Grad ist.

14. Niet (R) nach Anspruch 1, **dadurch gekennzeichnet, dass** der Dorn (400) mit einer Vielzahl von Riefen (420) vorgeformt ist, auf die der Kopf der Hülse gebördelt wird.

15. Verfahren zum Setzen eines Niets (R) nach Anspruch 1 und 14, **dadurch gekennzeichnet, dass** es darin besteht, den Kopf der Hülse (310) auf die Riefen (420) des Dorns (420) zu bördeln, nachdem der bewegliche Teil (330) der Hülse (300) auf dem zu befestigenden Element (200) aufliegt, und bevor eine Zugbelastung, die der oberen Steifigkeitsgrenze des beweglichen Teils (330) nach seiner Ausweitung entspricht, überschritten wird.
